(19) Europäisches Patentamt
European Patent Office
Office européen des brevets

(11) Veröffentlichungsnummer: **0 324 106 B1**

(12) # EUROPÄISCHE PATENTSCHRIFT

(45) Veröffentlichungstag der Patentschrift: **10.08.94**

(51) Int. Cl.5: **C08K 5/00**, C08L 27/02, //(C08K5/00,5:13,5:52)

(21) Anmeldenummer: **88120400.2**

(22) Anmeldetag: **07.12.88**

(54) **Verwendung einer Polyolefinformmasse für Dauerkontakt mit extrahierenden Medien.**

(30) Priorität: **18.12.87 DE 3742933**

(43) Veröffentlichungstag der Anmeldung: **19.07.89 Patentblatt 89/29**

(45) Bekanntmachung des Hinweises auf die Patenterteilung: **10.08.94 Patentblatt 94/32**

(84) Benannte Vertragsstaaten: **AT BE CH DE ES FR GB IT LI NL SE**

(56) Entgegenhaltungen:
**US-A- 4 187 212**

**CHEMICAL ABSTRACTS, Band 109, Nr. 26, 26. Dezember 1988, Seite 40, Nr. 232107n,Columbus, Ohio, US; & CS-A-241 659**

(73) Patentinhaber: **HOECHST AKTIENGESELLSCHAFT**

**D-65926 Frankfurt (DE)**

(72) Erfinder: **Pfahler, Gerhard, Dr.**
**Karlsbacher Strasse 27**
**D-8900 Augsburg (DE)**
Erfinder: **Lötzsch, Klaus, Dr.**
**Hegerstrasse 5**
**D-6113 Babenhausen (DE)**

EP 0 324 106 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf die Verwendung einer Polyolefin-Formmasse, die eine besondere chemische Stabilität bei Kontakt mit extrahierenden Medien besitzt.

Es ist bekannt, daß Polyolefine durch geeignete Stabilisatorsysteme gegen oxidative Schädigung während der Herstellung, der Verarbeitung und des Gebrauchs geschützt werden müssen. Solche Stabilisatorsysteme bestehen beispielsweise aus einem phenolischen Antioxidans, das insbesondere die Langzeit-Gebrauchsstabilität des Fertigteiles gewährleisten soll, und einem oder mehreren Costabilisatoren, welche die Verarbeitungsstabilität regeln und teilweise auch die Wirkung der phenolischen Komponente synergistisch verstärken.

Eine bekannte Stabilisatorkombination dieser Art besteht aus einem phenolischen Antioxidans mit einem symmetrischen Triarylphosphit der Formel

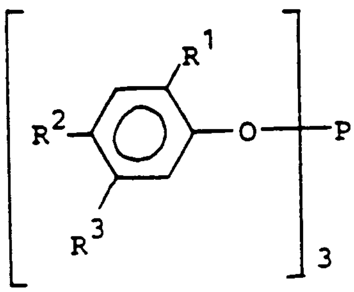 ,

worin die Reste R verschiedene aliphatische oder aromatische Reste und $R^2$ und $R^3$ noch zusätzlich Wasserstoff sein können (vgl. US-B-4 187 212). Insbesondere wird Tris-(2,4-di-t-butylphenyl)-phosphit zusammen mit einem phenolischen Antioxidans in der Praxis häufig angewendet. Diese vielbenutzten Stabilisatoren sind jedoch nicht für alle Anwendungen geeignet. In vielen Fällen stehen die Formmassen, die in der beschriebenen Weise stabilisiert sind, während ihres Gebrauchs in Kontakt mit flüssigen Medien. Hierfür ist es erforderlich, daß auch die der Formmasse zugesetzten Stabilisatoren eine ausreichende chemische Resistenz gegen die jeweiligen Kontaktmedien besitzen. Wo diese nicht gegeben ist, versagt das Fertigteil im Dauergebrauch lange vor der Zeit, die aus Labortests, die unter trockenen Bedingungen durchgeführt wurden, abgeleitet werden kann. Für derartige Teile wie Wasserrohre, Seekabel oder Tanks ergibt sich damit eine erhebliche Gefährdung.

Bekannt sind ferner wasserbeständige Propylenpolymere, welche Ethylenglykol-bis[3,3-bis-(3'-t-butyl-4'-hydroxyphenyl)butyrat], 4-Pentadekakis(propenyl)-3,5-dimethy-phenol und Thiopropionsäureester und gegebenenfalls Triphosphite oder 2,6-Di-t-butyl-hydroxytoluol enthalten (vgl. Chemical Abstracts, Bd. 109, Nr. 26, S. 40, Nr. 232107 n). Besondere Auswahlkriterien werden nicht angegeben. Zudem enthält die Stbilisatorkombination zwei phenolische Antioxidantien und eine Thioverbindung.

Die Aufgabe bestand darin, eine Polyolefinformmasse zu finden, welche im Langzeitkontakt mit extrahierenden Medien von der chemischen Stabilität so wenig wie möglich verliert.

Es wurde gefunden, daß eine Polyolefinformmasse, welche ein bestimmtes organisches Phosphit und eine bestimmte phenolische Verbindung enthält, die Aufgabe zu lösen vermag.

Die Erfindung betrifft somit die Verwendung einer Polyolefinformmasse, bestehend aus
90 bis 99,98 Gew.-% eines Olefinpolymers,
0,01 bis 5 Gew.-% eines Triarylphosphits und
0,01 bis 5 Gew.-% eines phenolischen Antioxidans,
wobei das Triarylphosphit ein solches der Formel I ist

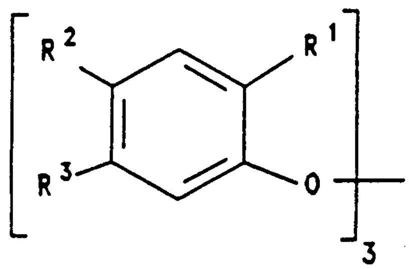

(I),

worin
$R^1$ eine t-Butyl-, 1,1-Dimethylpropyl-, Cyclohexyl- oder Phenylgruppe ist und
$R^2$ und $R^3$ gleich oder verschieden sind und ein
Wasserstoffatom, eine Methyl-, t-Butyl-,
1,1-Dimethylpropyl-, Cyclohexyl- oder Phenylgruppe bedeuten, und
das phenolische Antioxidans ein
Ester der 3,3-Bis-(3'-t-butyl-4'-hydroxyphenyl)-butansäure der Formel II ist

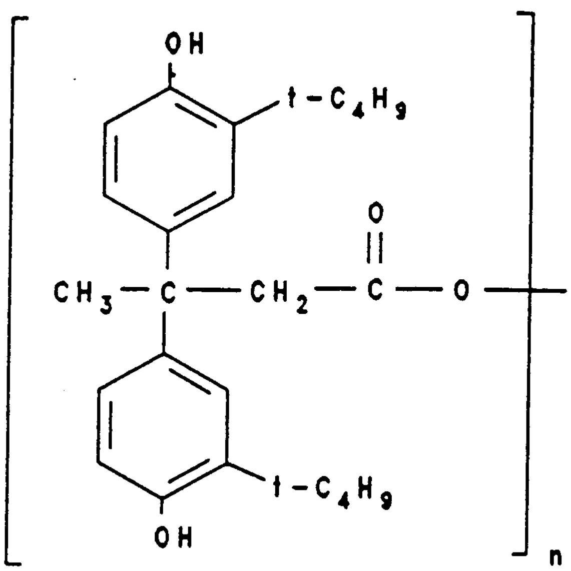

(II),

worin $R^4$ einen $C_1$-$C_{12}$-Alkylrest oder einen $C_1$-$C_{12}$-Alkylenrest bedeutet und n 1 oder 2 ist, zur Herstellung von Gegenständen, die mit extrahierenden Medien im Dauerkontakt stehen.

Das Polyolefin in der erfindungsgemäß zu verwendenden Formmasse kann beispielsweise eines der im folgenden genannten Polymeren sein:

1. Polymere von Mono- oder Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.
2. Mischungen der unter 1. genannten Polymeren z.B. Mischungen von Polypropylen mit Polyisobutylen.
3. Copolymere von Mono- und Diolefinen untereinander oder mit anderen Vinylmonomeren wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere); sowie Terpolymere von Ethylen mit Propylen und einem Dien, wie Hexadien, Dicyclopentadien oder Ethylidennorbornen.

Der Anteil des Polyolefins an der erfindungsgemäßen Formmasse beträgt 90 bis 99,98, vorzugsweise 98 bis 99,92 Gew.-%.

Als Stabilisator enthält die Formmasse ein organisches Phosphit und ein phenolisches Antioxidans.

Das organische Phosphit ist ein Triarylphosphit der Formel I

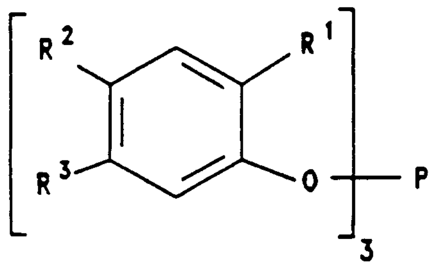

(I),

worin
$R^1$ eine t-Butyl-, 1,1-Dimethylpropyl-, Cyclohexyl- oder Phenylgruppe ist und
$R^2$ und $R^3$ gleich oder verschieden sind und ein
Wasserstoffatom, eine Methyl-, t-Butyl-, 1,1-Dimethylpropyl-, Cyclohexyl- oder Phenylgruppe bedeuten. Besonders bevorzugt ist Tris-(2,4-di-t-butylphenyl)-phosphit.

Das phenolische Antioxidans ist ein Ester der 3,3-Bis-(3'-t-butyl-4'-hydroxyphenyl)-butansäure der Formel II

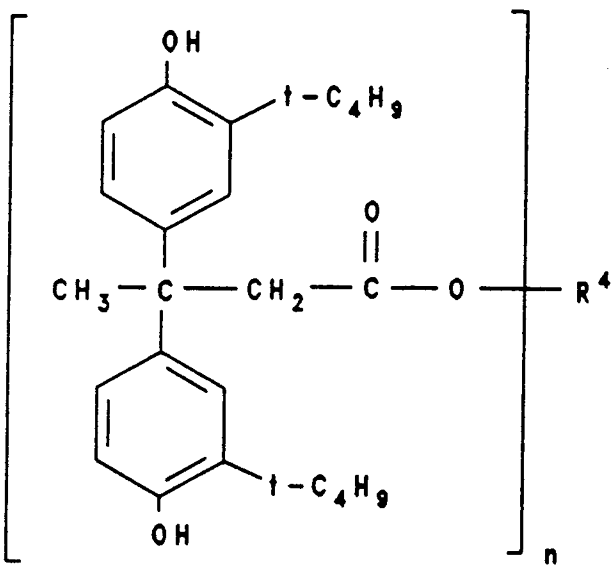

(II),

worin $R^4$ einen $C_1$-$C_{12}$-Alkylrest oder einen $C_1$-$C_{12}$-Alkylenrest bedeutet und n 1 oder 2 ist. Vorzugsweise ist $R^4$ ein $C_2$-$C_4$-Alkylenrest, insbesondere ein $C_2$-Alkylenrest.

Der Anteil des Phosphits und des phenolischen Antioxidans in der erfindungsgemäß zu verwendenden Formmasse beträgt 0,01 bis 5, vorzugsweise 0,04 bis 1 Gew.-% für das Phosphit und 0,01 bis 5, vorzugsweise 0,04 bis 1 Gew.-% für das phenolische Antioxidans.

Wahlweise kann die erfindungsgemäß zu verwendende Formmasse noch weitere Additive enthalten, wie beispielsweise:

**1. Antioxidantien**

**1.1 Alkylierte Monophenole**

2,6-Di-tert.-butyl-4-methylphenol, 2-Tert.-butyl-4,6-dimethylphenol, 2,6-Di-tert.-butyl-4-ethylphenol, 2,6-Di-tert.-butyl-4-n-butylphenol, 2,6-Di-tert.-butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.-butyl-4-methoxymethylphenol.

**1.2 Alkylierte Hydrochinone**

2,6-Di-tert.-butyl-4-methoxyphenol, 2,5-Di-tert.-butyl hydrochinon, 2,5-Di-tert.-amyl-hydrochinon, 2,6-Diphenyl-4-octadecyclooxyphenol.

**1.3 Hydroxylierte Thiodiphenylether**

2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol).

**1.4 Alkyliden-Bisphenole**

2,2'-Methylen-bis-(6-tert.-butyl-4-methylphenol), 2,2'-Methylen-bis-(6-tert.-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.-butylphenol), 2,2'-Ethyliden-bis-(4,6-di-tert.-butylphenol), 2,2'-Ethyliden-bis-(6-tert.-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.-butyl-2-methylphenol), 1,1-Bis-(5-tert.-butyl-4-hydroxy-2-methylphenyl)-butan, 2,6-Di-(3-tert.-butyl-5-methyl-2-hydroxybenzyl)-4-methylphenol, 1,1,3-Tris-(5-tert.-butyl-4-hydroxy-2-methylphenyl)-butan, 1,1-Bis-(5-tert.-butyl-4-hydroxy-2-methylphenyl)-3-n-dodecylmercaptobutan, Di-(3-tert.-butyl-4-hydroxy-5-methylphenyl)-dicyclopentadien, Di-[2-(3'-tert.-butyl-2'-hydroxy-5'-methylbenzyl)-6-tert.-butyl-4-methyl-phenyl]-terephthalat.

**1.5 Benzylverbindungen**

1,3,5-Tri-(3,5-di-tert.-butyl-4-hydroxybenzyl)-2,4,6-tri-methylbenzol, Di-(3,5-di-tert.-butyl-4-hydroxybenzyl)-sulfid, 3,5-Di-tert.-butyl-4-hydroxybenzyl-mercaptoessigsäure-iso-octylester, Bis-(4-tert.-butyl-3-hydroxy-2,6-dimethylbenzyl)-dithiol-terephthalat, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 3,5-Di-tert.-butyl-4-hydroxybenzyl-phosphonsäure-dioctadecylester, Calciumsalz des 3,5-Di-tert.-butyl-4-hydroxybenzyl-phosphonsäure-monoethylesters.

**1.6 Acylaminophenole**

4-Hydroxy-laurinsäureanilid, 4-Hydroxy-stearinsäureanilid, 2,4-Bis-octylmercapto-6-(3,5-di-tert.-butyl-4-hydroxyanilino)-s-triazin, N-(3,5-di-tert.-butyl-4-hydroxyphenyl)-carbaminsäureoctylester.

**1.7 Ester der β-(3,5-Di-tert.-butyl-4-hydroxyphenyl)-propionsäure** mit ein- oder mehrwertigen Alkoholen, wie z.B. mit

| | |
|---|---|
| Methanol | Diethylenglykol |
| Octadecanol | Triethylenglykol |
| 1,6-Hexandiol | Pentaerythrit |
| Neopentylglykol | Tris-hydroxyethyl-isocyanurat |
| Thiodiethylenglykol | Di-hydroxyethyl-oxalsäurediamid |

**1.8 Ester der β-(5-tert.-butyl-4-hydroxy-3-methylphenyl)-propionsäure** mit ein- oder mehrwertigen Alkoholen, wie z.B. mit

| | |
|---|---|
| Methanol | Diethylenglykol |
| Octadecanol | Triethylenglykol |
| 1,6-Hexandiol | Pentaerythrit |
| Neopentylglykol | Tris-hydroxyethyl-isocyanurat |
| Thiodiethylenglykol | Di-hydroxyethyl-oxalsäurediamid |

**1.9 Amide der β-(3,5-Di-tert.-butyl-4-hydroxyphenyl)-propionsäure,** wie z.B.

N,N'-Di-(3,5-di-tert.-butyl-4-hydroxyphenylpropionyl)-hexamethylendiamin, N,N'-Di-(3,5-di-tert.-butyl-4-hydroxyphenylpropionyl)-trimethylendiamin, N,N'-Di-(3,5-di-tert.-butyl-4-hydroxyphenylpropionyl)-hydrazin.

**2. UV-Adsorber und Lichtschutzmittel**

**2.1 2-(2'-Hydroxymethyl)-benztriazole,** wie z.B. das 5'-Methyl-, 3',5'-Di-tert.-butyl-, 5'-Tert.-butyl-, 5'-(1,1,3,3-Tetramethylbutyl)-, 5-Chlor-3',5'-di-tert.-butyl-, 5-Chlor-3'-tert.-butyl-5'-methyl-, 3'-sec.-Butyl-5'-tert.-butyl-, 4'-Octoxy-, 3',5'-Di-tert.-amyl-, 3',5'-Bis-(α,α-dimethylbenzyl)-Derivat.

**2.2 2-Hydroxybenzophenone,** wie z.B. das

4-Hydroxy-, 4-Methoxy-, 4-Octoxy-, 4-Decyloxy-, 4-Dedecyloxy-, 4-Benzyloxy-, 4,2' ,4'-Trihydroxy-, 2'-Hydroxy-4,4'-dimethoxy-Derivat.

**2.3 Ester von gegebenenfalls substituierten Benzoesäuren,** wie z.B.
4-Tert.-butyl-phenylsalicylat, Phenylsalicylat, Octylphenylsalicyalat, Dibenzoylresorcin, Bis-(4-tert.-butylbenzoyl)-resorcin, Benzoylresorcin, 3,5-Di-tert.-butyl-4-hydroxybenzoesäure-2,4-di-tert.-butylphenylester, 3,5-Di-tert.-butyl-4-hydroxybenzoesäurehexadecylester.
**2.4 Acrylate,** wie z.B.
α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäuremethylester,N-(β-Carbomethoxy-β-cyanovinyl)-2-methyl-indolin.
**2.5 Nickelverbindungen,** wie z.B.
Nickelkomplexe des 2,2'-Thio-bis-[4-(1,1,3,3-tetramethylbutyl)-phenols],wie der 1:1- oder 1:2-Komplex, gegebenenfalls mit zusätzlichen Liganden wie n-Butylamin, Triethanolamin oder N-Cyclohexyl-diethanolamin, Nickelalkyldithiocarbamate, Nickelsalze von 4-Hydroxy-3,5-di-tert.-butyl-benzylphosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.
**2.6 Sterisch gehinderte Amine,** wie z.B.
Bis-(2,2,6,6-tetramethylpiperidyl)-sebacat, Bis-(1,2,2,6,6-pentamethylpiperidyl)-sebacat, n-Butyl-3,5-di-tert.-butyl-4-hydroxybenzyl-malonsäure-bis-(1,2,2,6,6-pentamethyl-piperidyl)-ester, Kondensationsprodukt aus 1-Hydroxymethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).
**2.7 Oxalsäurediamide,** wie z.B.
4,4'-Di-octyloxy-oxanilid, 2,2'-Di-octyloxy-5,5'-di-tert.-butyl-oxanilid, 2,2'-Didodecyloxy-5,5'-di-tert.-butyloxanilid, 2-Ethoxy-2'-ethyl-oxanilid, N,N'-Bis-(3-dimethylaminopropyl)-oxalamid, 2-Ethoxy-5-tert.-butyl-2'-ethyloxanilid und dessen Gemisch mit 2-Ethoxy-2'-ethyl-5,4'-di-tert.-butyl-oxanilid, Gemische von ortho- und para-Methoxy- sowie von o- und p-Ethoxy-di-substituierte Oxaniliden.

**3. Metalldesaktivatoren,** wie z.B.

N,N'-Diphenyloxalsäurediamid, N-Salicylal-N'-salicyloyl-hydrazin, N,N'-Bis-salicyloyl-hydrazin, N,N'-Bis-(3,5-di-tert.-butyl-4-hydroxyphenylpropionyl)-hydrazin, 3-Salicyloylamino-1,2,3-triazol, Bis-benzyliden-oxalsäuredihydrazid.

**4. Phosphite und Phosphonite,** wie z.B.

Triphenylphosphit, Diphenylalkylphosphite, Phenyldialkylphosphite, Tri-(nonylphenyl)-phosphit Trilaurylphosphit, Trioctadecylphosphit, Distearyl-pentaerythritdiphosphit, Tris-(2,4-di-tert.-butylphenyl)-phosphit, Diisodecylpentaerythrit-diphosphit, Di-(2,4-di-tert.-butylphenyl)-penta-erythritdiphosphit, Tristearyl-sorbit-triphosphit, Tetrakis-(2,4-di-tert.-butylphenyl)-4,4'-biphenylen-diphosphonit, 3,9-Bis-(2,4-di-tert.-butylphenoxy-2,4,8,10-tetraoxa-3,9-di-phosphaspiro[5,5]undecan.

**5. Peroxidzerstörende Verbindungen,** wie z.B.

Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-alkyl-di-thiocarbamate, Dioctadecylsulfid, Pentaerythrit-tetrakis-(β-dodecylmercapto)-propionat.

**6. Basische Co-Stabilisatoren,** wie z.B.

Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

**7. Nukleiierungsmittel,** wie z.B.

4-tert.-Butylbenzoesäure, Adipinsäure, Diphenylessigsäure.

**8. Füllstoffe und Verstärkungsmittel,** wie z.B.

Calciumcarbonat, Silikate, Glasfasern, Asbest, Talk, Kaolin, Glimmer, Bariumsulfat, Metalloxide und -hydroxide, Ruß, Graphit.

**9. Sonstige Zusätze,** wie z.B.

Weichmacher, Gleitmittel, Emulgatoren, Pigmente, optische Aufheller, Flammschutzmittel, Antistatika, Treibmittel.

Die Herstellung der erfindungsgemäß zu verwendenden Polyolefinformmasse erfolgt nach bekannten Methoden. Sie kann beispielsweise erfolgen durch Einmischen der Stabilisatoren und gegebenenfalls weiterer Additive nach den in der Technik üblichen Verfahren vor oder während der Formgebung, oder auch durch Aufbringen der gelösten oder dispergierten Verbindungen auf das Polymer, gegebenenfalls unter nachträglichem Verdunsten des Lösemittels. Die Stabilisatoren können auch in Form eines Masterbatches, welcher diese Produkte in einer Konzentration von ca. 2,5 bis 25 Gew.-% enthalten kann, der herzustellenden Formmasse zugesetzt werden. Eine Zugabe vor einer eventuellen Vernetzung ist ebenfalls möglich.

Die verschiedenen zusätzlichen Additive der vorgenannten Gruppen 1 bis 7 werden der erfindungsgemäß zu verwendenden Formmasse in einer Menge von 0,01 bis 10, vorzugsweise 0,01 bis 5 Gew.-%, bezogen auf das Gesamtgewicht der Formmasse, zugesetzt. Der Mengenanteil der Additive der Gruppen 8 und 9 beträgt 1 bis 80, vorzugsweise 10 bis 50 Gew.-%, bezogen auf die gesamte Formmasse.

Die erfindungsgemäß zu verwendende Polyolefinformmasse zeichnet sich durch eine sehr gute Langzeitstabilität in Gegenwart extrahierender Medien aus. Der erfindungsgemäß zu verwendende Ester der 3,3-Bis-(3'-t.-butyl-4'-hydroxyphenyl)-butansäure ist gegen Hydrolyse außerordentlich stabil, nicht nur als reine Substanz, sondern auch in Gegenwart des Triarylphosphits der Formel I.

So zeigen beispielsweise die sehr häufig als phenolisches Antioxidans benutzten Ester der $\beta$-(3,5-Di-t.-butyl-4-hydroxyphenyl)-propionsäure bereits beim Kontakt des damit ausgerüsteten Kunststoffs mit der Feuchtigkeit der umgebenden Raumluft eine deutliche Neigung zur Hydrolyse. Ein Dünnschichtchromatogramm zeigt, daß das Phenol im Polymer beim Lagern systematisch verändert wird und beim Extrahieren mit Wasser Bruchstücke in das Kontaktmedium wandern. In Gegenwart eines Phosphits der Formal I wird diese Spaltung des Stabilisators in kleinere Bruchstücke drastisch beschleunigt und umso ausgeprägter, je länger die Lagerzeit

Die erfindungsgemäß zu verwendende Formmasse eignet sich besonders zur Herstellung von Gegenständen, welche mit extrahierenden Medien, insbesondere Wasser, im Dauerkontakt stehen, wie beispielsweise Rohre, Tanks, Kabelhüllen, Kleinbehälter, Netze, Seile oder flächige Gewebe.

Die folgenden Beispiele sollen die Erfindung weiter erläutern.

**Beispiel 1**

Es wurden die radioaktiv-markierten Verbindungen Tetrakis-[3-(3,5-di-t.-butyl-4-hydroxyphenyl)-propionyloxy-methylen)-methan-(propionyl-1-$^{14}C$) (= Pentaerythritester der $\beta$-(3,5-Di-t-butyl-4-hydroxyphenylpropionsäure = AOI) und Ethylen-di-(3,3-bis-(3-t.-butyl-4-hydroxyphenyl)-butanoat)-(butanoyl-3 -$^{14}C$) (3,3-Bis-(3'-t-butyl-4'-hydroxyphenyl)-butansäureglykolester = AOII) hergestellt.

Das Einmischen der $^{14}C$-markierten Antioxidantien in Polyethylen-Pulver erfolgte im Labor-Rotationsverdampfer (Heidolph). Die Antioxidantien waren zunächst in Aceton gelöst; das Lösemittel wurde im Vakuum langsam abdestilliert. Auf diese Weise wurden gemischt:

498,5 g Ethylen-Copolymerisat (unstabilisiert),
Dichte 0,95 g/cm$^3$, MFI 190/5 = 0,4 g/10 min
1 g Calciumstearat ($\widehat{=}$ 0,2 %)
0,5 g $^{14}C$-markiertes Antioxidans ($\widehat{=}$ 0,1 %)

Die Herstellung der Prüfkörper erfolgte im Technikumsmaßstab auf einer Spritzgußmaschine, Typ Arburg Allrounder, mit einer kernprogressiven Plastifizierschnecke mit 20 Stegnuten und einem elektrisch beheizten Gießwerkzeug. Aus den tropfenförmigen Spritzteilen (2,3 g, 1 mm Stärke) wurden mit einer Drehdornpresse kreisrunde Prüfkörper, Durchmesser 39 mm (in Sonderfällen auch 12 mm) ausgestanzt.

Die Prüfkörper wurden in einer versilberten Drahtspirale gehalten und mit dieser Vorrichtung in einem Wägeglas mit dem Prüfmedium Wasser allseitig bedeckt. Nach bestimmten Zeiten wurden Proben der Flüssigkeit entnommen und mit einem Flüssigkeitsszintillationszähler die Radioaktivität gemessen. Daraus wurde die Migration berechnet. Die Ergebnisse sind in Tabelle 1 zusammengefaßt.

TABELLE 1

| Extraktionszeit (Tage) | Migration (mg/dm²) sofort 0,1% AOI | sofort 0,1% AOH | 20 Monate nach Herstellung der Prüfkörper 0,1% AOI | 0,1% AOH | 0,05% AOI | 0,05 % AOH | 0,05% AOI 0,05% AOPI 1) | 0,05% AOH 0,05% AOPI | 24 Monate 0,1% AOI | 0,1% AOH |
|---|---|---|---|---|---|---|---|---|---|---|
| 1 | | | 0,043 | 0,005 | 0,033 | 0,002 | 0,062 | 0,002 | 0,059 | 0,005 |
| 2 | 0,011 | 0,007 | | | | | | | | |
| 3 | | | 0,084 | 0,006 | 0,064 | 0,004 | 0,116 | 0,004 | 0,120 | 0,009 |
| 6 | 0,021 | 0,010 | 0,131 | 0,012 | 0,097 | 0,006 | 0,171 | 0,006 | 0,181 | 0,014 |
| 9 | 0,025 | 0,013 | | | | | | | | |
| 10 | | | 0,175 | 0,014 | 0,129 | 0,008 | 0,220 | 0,007 | 0,234 | 0,016 |
| 14 | 0,031 | | | | | | | | | |
| 17 | 0,037 | 0,015 | 0,239 | 0,018 | 0,170 | 0,010 | 0,285 | 0,009 | | |
| 20 | 0,041 | 0,016 | | | | | | | | |
| 25 | 0,048 | 0,017 | 0,300 | 0,021 | 0,206 | 0,012 | 0,342 | 0,011 | 0,377 | 0,026 |
| . . . . | . . . . | . . . . | . . . . | . . . . | . . . . | . . . . | . . . . | . . . . | . . . . | . . . . |
| 40 | 0,066 | 0,019 | 0,373 | 0,025 | 0,250 | 0,015 | 0,402 | 0,015 | 0,454 | 0,032 |

Migration von Antioxidantien am HDPE in Wasser bei 49°C in Abhängigkeit von der Lagerzeit der Prüfkörper

1) AOPI = Tris-(2,4-di-t-butylphenyl)-phosphit

**Beispiel 2**

Es wurden Prüfkörper wie in Beispiel 1, jedoch mit folgender Rezeptur hergestellt:
93,75 Teile Ethylen-Copolymerisat wie in Beispiel 1
6,25 Teile Farbkonzentrat (40 Gew.-% Ruß)

0,2 Teile Ca-Stearat
0,05 Teile phenolisches Antioxidans
0,05 Teile Tris-(2,4-di-tert.-butylphenyl)-phosphit.

Die Probekörper wurden in einem Wasserbad bei 80 °C unterschiedliche Zeiten gelagert. Anschließend wurden kleine Proben entnommen. In einem DSC-Gerät (Differential Scanning Calorimetry) wurde bei 200 °C die Zeit bestimmt, bei der in einen Sauerstoffstrom von 50 $cm^3$/min eine exotherme Reaktion den Verbrauch der Stabilisierung anzeigte. Diese Zeit wird Oxydations-Induktions-Zeit ("OIT") genannt. Die Ergebnisse sind in Tabelle 2 zusammengesetellt. Man erkennt, daß die Verminderung der OIT für die erfindungsgemäße StabilisatorKombination von AO II mit Phosphit-(I) nach Kontakt mit Wasser viel geringer ist als die von AO I.

Tabelle 2

| phenolisches Antioxidans | OIT in Minuten nach Wasserlagerung (80 °C) von | | |
|---|---|---|---|
| | 0 Stunden | 500 Stunden | 1000 Stunden |
| 0,05 T. AO II | 22 | 14 | 6 |
| 0,05 T. AO I | 52 | 8 | 5 |

**Beispiel 3**

Es wurden Probekörper wie in Beispiel 1 beschrieben hergestellt, jedoch mit folgender Rezeptur:

100 Teile Propylen-Homopolymerisat
(Dichte 0,90 g/$cm^3$ (bei 23 °C), Schmelzindex 230/2,16: 2 g /10 min)
0,2 Teile Ca-Stearat
0,1 Teile phenolisches Antioxidans (AO II oder AO I)

Die Ergebnisse sind in Tabelle 3 zusammengestellt.

Tabelle 3

| Migration von AO II-$^{14}$C und AO I-$^{14}$C aus Polypropylen in Wasser bei 49 °C | | |
|---|---|---|
| Versuchszeit (Tage) | Mengen an migriertem Stabilisator in $\mu g/cm^2$ | |
| | AO II | AO I |
| 1 | 0,004 | 0,018 |
| 4 | 0,007 | 0,040 |
| 6 | 0,010 | 0,055 |
| 8 | 0,012 | 0,071 |
| 11 | 0,014 | 0,091 |
| 18 | 0,019 | 0,135 |
| 25 | 0,026 | 0,194 |

**Patentansprüche**

**1.** Verwendung einer Polyolefinformmasse, bestehend aus
90 bis 99,98 Gew.-% eines Olefinpolymers,
0,01 bis 5 Gew.-% eines Triarylphosphits und
0,01 bis 5 Gew.-% eines phenolischen Antioxidans,
wobei das Triarylphosphit ein solches der Formel I ist

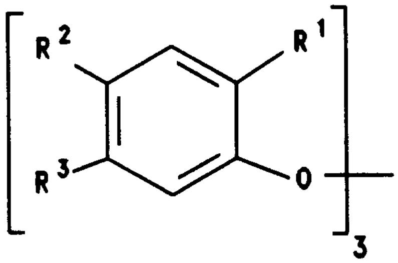

(I),

worin
$R^1$ eine t-Butyl-, 1,1-Dimethylpropyl-, Cyclohexyl- oder Phenylgruppe ist und
$R^2$ und $R^3$ gleich oder verschieden sind und ein Wasserstoffatom, eine Methyl-, t-Butyl-, 1,1-Dimethylpropyl-, Cyclohexyl- oder Phenylgruppe bedeuten, und
das phenolische Antioxidans ein Ester der 3,3-Bis-(3'-t-butyl-4'-hydroxyphenyl)-butansäure der Formel II ist

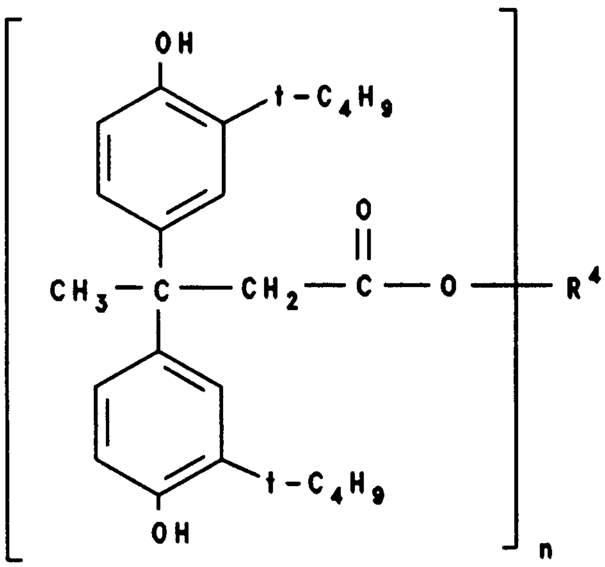

(II),

worin $R^4$ einen $C_1$-$C_{12}$-Alkylrest oder einen $C_1$-$C_{12}$-Alkylenrest bedeutet und n 1 oder 2 ist, zur Herstellung von Gegenständen, die mit extrahierenden Medien im Dauerkontakt stehen.

## Claims

**1.** The use of a polyolefin molding compound, comprising
90 to 99.98 % by weight of an olefin polymer,
0.01 to 5 % by weight of a triaryl phosphite and
0.01 to 5 % by weight of a phenolic antioxidant,
where the triaryl phosphite is of the formula I

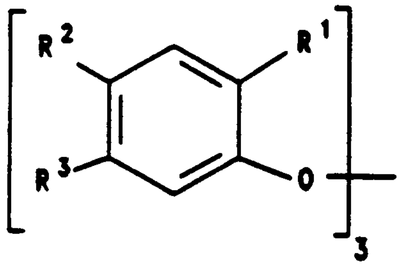

(I),

in which
$R^1$ is a t-butyl, 1,1-dimethylpropyl, cyclohexyl or phenyl group and
$R^2$ and $R^3$ are identical or different and are a hydrogen atom, a methyl, t-butyl, 1,1-dimethylpropyl, cyclohexyl or phenyl group, and
the phenolic antioxidant is an ester of 3,3-bis(3'-t-butyl-4'-hydroxyphenyl)butanoic acid of the formula II

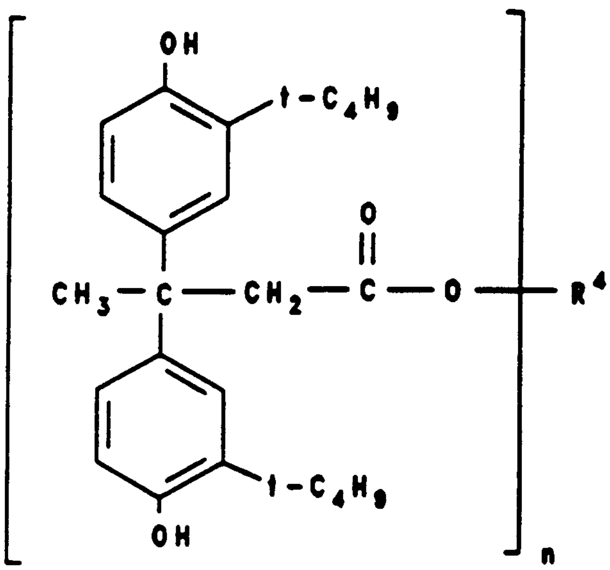

(II),

in which $R^4$ is a $C_1$-$C_{12}$-alkyl radical or a $C_1$-$C_{12}$-alkylene radical and n is 1 or 2, for producing objects which remain in longterm contact with extractive media.

## Revendications

**1.** Utilisation d'une masse de moulage à base de polyoléfine, composée
de 90 à 99,98 % en poids d'unpolymère oléfinique,
de 0,01 à 5 % en poids d'un phosphite de triaryle et
de 0,01 à 5 % en poids d'un antioxydant phénolique,
le phosphite de triaryle répondant à la formule I

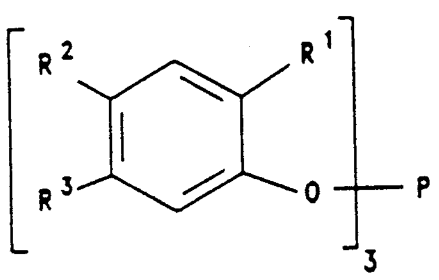

(I),

dans laquelle
$R^1$ représente les groupes t-butyle, 1,1-diméthylpropyle, cyclohexyle ou phényle, et
$R^2$ et $R^3$ sont identiques ou différents et représentent un atome d'hydrogène, les groupes méthyle, t-butyle, 1,1-diméthylpropyle, cyclohexyle ou phényle, et l'antioxydant phénolique est un ester de l'acide 3,3-bis-(3'-t-butyl-4'-hydroxyphényl)-butanoïque de formule II

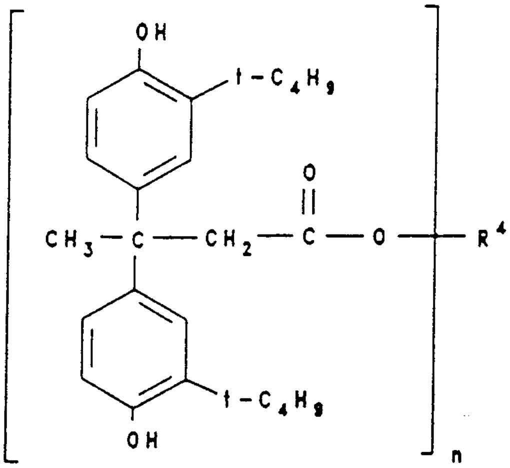

(II),

où $R^4$ représente les radicaux alkyle en $C_1$-$C_{12}$ ou alkylène en $C_1$-$C_{12}$ et n vaut 1 ou 2, pour la préparation d'objets, qui sont en contact permanent avec des milieux extractifs.